# EUROPÄISCHE PATENTSCHRIFT

(11) **EP 0 399 355 B1**
(45) Veröffentlichungstag und Bekanntmachung des Hinweises auf die Patenterteilung: **13.07.1994**
(21) Anmeldenummer: 90109220.5
(22) Anmeldetag: 16.05.1990
(51) Int. Cl.: H04H 1/00

(54) **Rundfunkempfänger**
Broadcast receiver
Récepteur de radiodiffusion

(30) Priorität: 26.05.1989 DE 3917236
(43) Veröffentlichungstag der Anmeldung: 28.11.1990
(73) Patentinhaber: Blaupunkt-Werke GmbH, 31132 Hildesheim (DE)
(72) Erfinder: Hegeler, Wilhelm, D-3200 Hildesheim (DE)

(56) Entgegenhaltungen:
- EP-A- 0 275 527
- GB-A- 2 209 103

## Beschreibung

Der Gegenstand des Schutzrechts ist ein Rundfunkempfänger mit einem Radiodatensignaldecoder, kurz RDS-Decoder genannt.

Bekanntlich befinden sich in dem von diesen RDS-Decodern ausgegebenen kontinuierlichen Datenstrom auch Daten über die Programmkette, PI-Code, zu der der eingestellte Sender gehört und über die alternativen Frequenzen AF , auf denen dasselbe Programm übertragen wird.

Es ist bekannt, einen PI-Code und die ihm zugeordneten AFs im Rundfunkempfänger zu speichern (z.B. EP-A-275527). Es ist auch schon vorgeschlagen worden, alle früher vom Rundfunkempfänger empfangenen PI-Codes und diesem zugeordnet die dabei eingestellten Frequenzen als alternative Frequenzen zu speichern.

Bei einem tragbaren Rundfunkempfänger, der in der Regel seinen Standort von Zeit zu Zeit wechselt, aber an dem neuen Standort wieder für eine Zeitdauer stationär betrieben wird, aber auch bei einem Autoradio, sind nicht alle alternativen Frequenzen, die der Datenstrom beinhaltet, von gleicher Bedeutung. Würde man, wie bereits vorgeschlagen, jedem empfangbaren PI-Code einen Speicher zuordnen, der Platz für alle vom System her möglichen alternativen Frequenzen bietet, so entstände ein erheblicher Speicherbedarf.

So lag der Erfindung unter anderem die Aufgabe zugrunde, diesen Speicherbedarf zu reduzieren.

Die Lösung dieser Aufgabe erfolgt durch die im Hauptanspruch angegebene Merkmalskombination.

Ein erfindungsgemäßer Rundfunkempfänger läßt sich daneben auch zur Lösung anderer Aufgaben vorteilhaft verwenden.

Anhand der Zeichnung wird die Erfindung im folgenden näher erläutert.

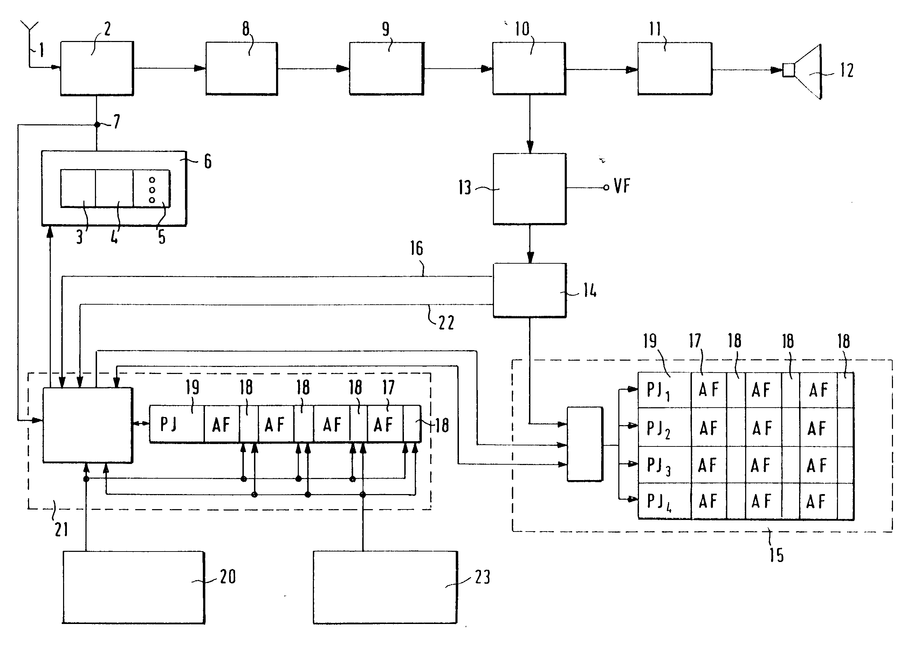

Die Figur 1 zeigt das Ausführungsbeispiel eines erfindungsgemäßen Rundfunkempfängers im Blockschaltbild.

Über eine Antenne 1 empfängt der Rundfunkempfänger den in dem Tuner 2 eingestellten Sender. Die Einstellung kann in gleicher Weise durch eine Handabstimmung 3, durch einen automatischen Sendersuchlauf 4 oder durch Stationstasten 5 erfolgen, die in einem Bedienteil 6 zusammengefaßt und an den Tuner angeschlossen sind. Die Daten, die die Einstellung des Tuners bestimmen, sind am Ausgang 7 des Bedienteils 6 für sich abgreifbar.

Die Modulation des im Tuner 2 eingestellten Senders wird in der ZF-Stufe 8 auf die Zwischenfrequenz des Empfängers umgesetzt und steht am Ausgang des Demodulators 9 zur Verfügung. Das Basisband des empfangenen Signals wird in der Filterstufe 10 vom 57-kHz-Hilfsträger getrennt. Das Tonsignal wird in der NF-Stufe 11 verstärkt und über den Lautsprecher 12 hörbar gemacht.

In dem an die Filterstufe 10 angeschlossenen ARI/RDS-Demodulator 13 werden die gegebenenfalls vorhandenen ARI-Kennungen und der RDS-Datenstrom vom Hilfsträger getrennt. Der stetige RDS-Datenstrom wird vom RDS-Decoder 14 in die in ihm enthaltenen Informationsblöcke unterteilt.

Die Informationen über die sogenannten Listen alternativer Frequenzen werden üblicherweise in einem geeigneten Großspeicher 15 abgelegt. Neben diesen Listen überträgt der Sender an anderer Stelle im Datenstrom auch den PI-Code der Programmkette, der der Sender zugeordnet ist. Dieser Code ist an dem Ausgang 16 des Decoders 14 abgreifbar.

In den Rundfunkempfängern, die auch alternative Frequenzen anderer Programmketten in einem Großspeicher 15 bereithalten, ist unter anderem der Speicherbedarf für den Großspeicher eine kritische Größe.

Daher sind in dem Großspeicher 15 des Ausführungsbeispiels der Erfindung neben jedem Speicherplatz 17 für die alternativen Frequenzen ein Bewertungsspeicher 18 vorgesehen, der mit einer kleinen Zahl gefüllt wird. Jeweils einer Speicherzeile für alternative Frequenzen ist ein Speicher 19 für einen PI-Code zugeordnet.

Die Erhöhung der in dem Bewertungsspeicher eingeschriebenen Zahl geschieht auf folgendem Wege. Sobald nach Einstellung eines neuen Senders dessen PI-Code am Ausgang 16 verfügbar ist werden von einer ersten entsprechend programmierten Steuerschaltung 20 aus dem Speicher 15 die diesen zugeordneten AFs, z. B. die in der Zeile 2 gespeicherten AFs in einen Arbeitsspeicher 21 eingelesen, und zwar zusammen mit den jeweiligen Häufigkeitszahlen, die den alternativen Fequenzen zugeordnet sind. In dem Arbeitsspeicher 21 stehen dann der eingestellte Sender und die zu ihm alternativ verwendbaren Senderfrequenzen und deren bisherige Häufigkeitszahl.

Die Zahl in dem Bewertungsspeicher 18, welcher der eingestellten Frequenz entspricht, die am Ausgang 7 des Bedienteils abgreifbar ist, wird sodann von der ersten Steuerschaltung um eine Einheit erhöht. Danach werden die am Ausgang 22 des RDS-Demodulators 14 abgreifbaren AFs aus der dem eingestellten Sender zugeordneten Liste und von ihm übertragenen alternative Frequenzen in den Arbeitsspeicher 21 eingelesen. Bei den Frequenzangaben, die mit solchen übereinstimmen, die bereits aus dem Großspeicher 15 ausgelesen wurden und sich im Arbeitsspeicher befinden, wird bei diesem Einlesevorgang die Häufigkeitszahl um eine Einheit erhöht, die übrigen AFs werden zusätzlich in den Arbeitsspeicher 21 mit der Häufigkeitszahl 1 eingeschrieben. Die jetzt im Arbeitspeicher 21 enthaltenen Frequenzangaben stehen über das Bedienteil zur alternativen Abstimmung es Empfängers zur Verfügung. Dabei wird der Empfänger, falls ein Senderwechsel erforderlich wird, zuerst auf die alternative Frequenz automatisch abgestimmt, deren Bewertungsspeicher die höchste Häufigkeitszahl enthält. Ist dieser Sender empfangswürdig, so wird die Häufigkeitszahl in dem Bewertungsspeicher 18 neben der neu eingestellten Frequenzangabe um eine Einheit erhöht.

Bei Einleitung eines Programmwechsels, z. B. durch Betätigung einer anderen Stationstaste oder durch manuelle Auslösung eines neuen Sendersuchlaufs, werden über eine zweite entsprechend programmierte Steuerschaltung 23 die Zahlen in allen Bewertungsspeichern 18 im Arbeitsspeicher 21 um eine Einheit erniedrigt und dabei alle diejenigen Frequenzangaben gelöscht, deren Bewertungsspeicher danach die Häufigkeitszahl Null enthält. Die verbleibenden alternativen Frequenzen werden mit ihrer Häufigkeitszahl in den Großspeicher 15 in die Zeile 2 zurückübertragen.

Die Löschung der Frequenzangaben in dem Arbeitsspeicher 21 kann in dem Programm der zweiten Steuerschaltung unterbleiben, solange die Zahl der alternativen Frequenzen in dem Arbeitsspeicher 21 kleiner als die Zahl der Plätze in der entsprechenden Speicherzeile im Groß-speicher 15 ist.

Ist dagegen die Zahl der Speicherplätze für alternative Frequenzen im Großspeicher 15 kleiner als die Zahl der alternativen Frequenzen, die nach der Löschung, d. h. nach der Verminderung der Häufigkeitszahl um eine Einheit im Arbeitsspeicher 21 verblieben sind, dann kann die Wiederholung der Verminderung der Häufigkeitszahl in der beschriebenen Weise um eine weitere Einheit und damit die Löschung weiterer AFs im Programm der zweiten Steuerschaltung 23 vorgesehen werden.

## Patentansprüche

1. Rundfunkempfänger
mit einem Radiodatensignaldecoder und Speichern (19) für die den empfangenen Sendern zugeordneten PI-Codes und weiteren Speichern (17) für die jedem PI-Code zugeordneten alternativen Frequenzen,
dadurch gekennzeichnet,
daß jedem Speicherplatz (17) für eine Frequenz ein Bewertungsspeicher (18) zugeordnet ist,
daß eine erste Steuerschaltung (20) vorgesehen ist, welche die Häufigkeit der Einstellung jeder Frequenz in den zugeordneten Bewertungsspeichern (18) einschreibt und daß eine zweite Steuerschaltung (23) vorgesehen ist, welche alle eingeschriebenen Häufigkeitszahlen um eine Einheit vermindert und die Frequenzen löscht, deren Häufigkeitszahl danach gleich Null ist.

2. Rundfunkempfänger nach Anspruch 1,
dadurch gekennzeichnet,
daß neben einem Großspeicher (15) für PI-Codes und je eine zugeordnete Liste alternativer Frequenzen ein Arbeitsspeicher (21) vorgesehen ist, der die dem PI-Code des eingestellten Senders zugeordnete Liste alternativer Frequenzen aus dem Großspeicher (15) aufnimmt als auch die vom eingestellten Sender übertragene Liste der alternativen Frequenzen und daß die Häufigkeitszahl in dem Bewertungsspeicher (18) bei denjenigen alternativen Frequenzen um eine Einheit erhöht wird, die sowohl aus dem Großspeicher (15) entnehmbar sind als auch in der empfangenen Liste (22) enthalten sind, und daß im Fall des Bedarfes der Abstimmung des Empfängers auf alternative Frequenzen diese gegebenenfalls nacheinander entsprechend ihrer Häufigkeitszahl aus dem Arbeitsspeicher (21) auswählbar sind.

## Claims

1. Radio receiver having a radio data signal decoder and memories (19) for the PI codes assigned to the stations received and further memories (17) for the alternative frequencies assigned to each PI code, characterized in that each memory location (17) for a frequency is assigned a rating memory (18), in that a first control circuit (20) is provided, which writes to the assigned rating memories (18) the rate-of-occurrence of the setting of each frequency and in that a second control circuit (23) is provided, which reduces all the written rate-of-occurrence numbers by one unit and erases the frequencies of which the rate-of-occurrence number thereafter is equal to zero.

2. Radio receiver according to Claim 1, characterized in that, apart from a mass memory (15) for PI codes and for each assigned list of alternative frequencies, a main memory (21) is provided, which receives from the mass memory (15) the list of alternative frequencies assigned to the PI code of the set station as well as the list of alternative frequencies transmitted by the set station, and in that the rate-of-occurrence number in the rating memory (18) is increased by one unit in the case of those alternative frequencies which both can be taken from the mass memory (15) and are contained in the received list (22), and in that, if it is required to tune the receiver to alternative frequencies, these are selectable, if appropriate one after the other, corresponding to their rate-of-occurrence number from the main memory (21).

## Revendications

1. Récepteur de radiodiffusion comportant
- un décodeur de signal radio et des mémoires (19) pour les codes PI associés aux émetteurs reçus ainsi que d'autres mémoires (17) pour les fréquences alternatives associées à chaque code PI,
récepteur caractérisé en ce que :
- à chaque emplacement de mémoire (17) destiné à une fréquence, on associe une mémoire d'exploitation (18),
- un premier circuit de commande (20) inscrit la fréquence statistique du réglage de chaque fréquence dans les mémoires d'exploitation correspondantes (18) et un second circuit (23) diminue d'une unité toutes les fréquences statistiques inscrites et efface les fréquences radio dont la fréquence statistique est alors égale à zéro.

2. Récepteur de radiodiffusion selon la revendication 1, caractérisé en ce qu'à côté d'une mémoire de grande capacité (15) pour les codes PI et une liste associée de fréquences alternatives, se trouve une mémoire de travail (21) qui reçoit la liste des fréquences alternatives du côté de l'émetteur réglé en provenance de la mémoire de grande capacité (15), ainsi que la liste des fréquences alternatives transmise par l'émetteur réglé et on augmente la fréquence statistique dans la mémoire d'exploitation (18), d'une unité pour chacune des fréquences alternatives qui proviennent à la fois de la mémoire de grande capacité (15) ou sont contenues dans la liste de réception (22) et en ce qu'en cas de besoin pour l'accord du récepteur sur des fréquences alternatives, celles-ci sont susceptibles d'être sélectionnées, le cas échéant, successivement dans la mémoire de travail (21) en fonction de leur fréquence statistique.
